Europäisches Patentamt

European Patent Office

Office européen des brevets

(19)

(11) Veröffentlichungsnummer: 0 141 094

A2

(12) EUROPÄISCHE PATENTANMELDUNG

(21) Anmeldenummer: 84109746.2

(22) Anmeldetag: 16.08.84

(51) Int. Cl.⁴: B 62 D 33/08
B 62 D 29/00

(30) Priorität: 30.08.83 DE 3331121

(43) Veröffentlichungstag der Anmeldung:
15.05.85 Patentblatt 85/20

(84) Benannte Vertragsstaaten:
AT BE CH DE FR GB IT LI LU NL SE

(71) Anmelder: Deutsche Schlauchbootfabrik Hans
Scheibert GmbH & Co. KG
Angerweg 5 Postfach 1169
D-3456 Eschershausen(DE)

(72) Erfinder: Blickwedel, Gerhard
Angerweg 20 b
D-3456 Eschershausen(DE)

(72) Erfinder: Gahl, Gotthard
Borwelle 18
D-3456 Eschershausen OT Scharfoldendorf(DE)

(74) Vertreter: Depmeyer, Lothar
i. Fa. Continental Gummi-Werke AG Königsworther Platz
1 Postfach 169
D-3000 Hannover 1(DE)

(54) Aufbau für Fahrzeuge.

(57) In Straßen-Kraftfahrzeugen mit fest eingebauten faltbaren Behältern zum Transportieren von flüssigen und festen Stoffen haben die aus gummi- oder kunststoffbeschichtetem Gewebe hergestellten Behälter erfindungsgemäß die Form von mit ihren kleineren Stirnflächen aufeinandergesetzten Kegelstümpfen und sind mit einer den Bereich ihrer kleinsten Querschnittsfläche umspannenden zugfesten Bandage ausgestattet. Die besondere Gestaltung der Behälter ermöglicht den Verzicht auf äußere mechanische Stützelemente und den vereinfachten Übergang von fließfähigem zu festem Transport-gut und umgekehrt.

EP 0 141 094 A2

Deutsche Schlauchbootfabrik Hans Scheibert GmbH & Co KG, Eschershausen

## Aufbau für Fahrzeuge

Die Erfindung bezieht sich auf Aufbauten für Fahrzeuge zum wechselweisen Transportieren von flüssigen oder fließfähigen und festen Stoffen oder Stückgütern, mit einem oder mehreren auf einer Ladeplattform fest angebrachten faltbaren Transportbehältern.

Nach bekannten Vorschlägen (z.B. deutsches Gebrauchsmuster 1 951 837) sind den faltbaren Transportbehältern Metallkästen als stützende und formgebende Elemente zugeordnet, in die hinein sich die Behälter im Verlaufe des Füllvorganges auffalten. Zum Aufnehmen anderer, festen Transportgutes sind dabei die Metallkästen einzeln auseinanderzunehmen und die Kastenwände gegen die Ladeplattform hin umzulegen. Der Erfindung liegt demgegenüber als Aufgabe zugrunde, durch eine neuartige Gestaltung der faltbaren Behälter die Notwendigkeit eigener Stützelemente zu vermeiden und als Folge davon den Übergang von der einen zur anderen Verladeart, das heißt also Aufnahme einmal von fließfähigem und zum anderen von festem Transportgut, zu vereinfachen.

Nach der Erfindung kennzeichnen sich Fahrzeugaufbauten der eingangs geschilderten Gattung dadurch, daß die aus biegsamem Werkstoff wie gummi- oder kunststoffimprägnierten oder -beschichteten Geweben od. dgl. hergestellten Transportbehälter im Füllungszustand die Form zweier mit ihren kleineren Stirnflächen aufeinandergesetzter Kegel- oder Pyramidenstumpf-Mäntel aufweisen und mit einer den Bereich ihrer kleinsten Querschnittsfläche umspannenden zugfesten Bandage versehen sind, wobei die Bandage gemäß einem wichtigen Teilmerkmal der Erfindung als ein fest mit der Behälterwandung verbundener, im Vergleich zu der möglichen Gesamthöhe der Behälter nur schmaler Gürtel aus biegsamen aber dehnungsarmen linienförmigen textilen Gebilden wie beispielsweise hochfesten Kunststoffasern, Metalldrähten oder -litzen od. dgl. ausgebildet ist. In Weiterbildung der Erfindung sind die Behälter von einer eine Ladefläche für feste Stoffe bildenden, in Abhängigkeit von dem Füllungszustand der Behälter auf- und abbeweglichen, zweckmäßig mit verschließbaren Einfüllöffnungen für die Behälter versehenen starren Platte abgedeckt. Die uneingeschränkte Gebrauchsfähigkeit eines solchen Fahrzeugaufbaues ist dann gesichert, wenn jeder Behälter mit einem durch Öffnungen in der Ladeplattform geführten Auslauftrichter versehen ist.

Die Erfindung schafft einen neuartigen Fahrzeugaufbau, der gleich gut zum Transportieren fließfähiger wie auch fester und stückiger Stoffe geeignet ist und der schnell und einfach praktisch ohne jeden Arbeitsaufwand überhaupt von dem einen auf das andere Transportgut umgestellt werden kann. Die zum Aufnehmen von Flüssigkeiten, Pulver, Granulaten und anderen fließfähigen Stoffen dienenden Behälter sind trotz der ganzflächigen Biegsamkeit ihrer Wandungen und der daraus gewonnenen extremen Zusammenfaltbarkeit zu einem nahezu nur eindimensionalen Gebilde im teil- und im vollgefüllten Zustand außerordentlich formstabile Körper. Der sonst mit biegsamen Behältern stets begegnenden Neigung, den durch Richtungs- und Geschwindigkeitsänderungen des Fahrzeugs verursachten Beschleunigungs- und Verzögerungskräften durch Verformungen nachzugeben und mit den daraus folgenden Verlagerungen des Transportgutes das Fahrverhalten oder zumindest die Straßenlage ungünstig und unter Umständen in gefährlichem Ausmaß zu beeinflussen, ist auf diese Weise ohne die mit wieder anderen Nachteilen verbundene Verwendung starrer Stützelemente wirksam vorgebeugt. Neben der definierten spindelartigen Doppelkegel- bzw. -pyradmidenform ist hierfür der die Querschnittseinschnürung im Mittenbereich markierende Gürtel von großer Bedeutung. Infolge seiner Herstellung aus hochfesten Fäden oder Drähten - Fasern aus aromatischen Polyamiden haben sich als besonders geeignet erwiesen, ohne damit aber Fasern anderer Provenienz auszuschließen - wirkt er im Verein mit seiner Anordnung in der Ebene des kleinsten Behälterquerschnittes formerhaltend und schwingungsdämpfend, während er andererseits aufgrund seiner Flexibilität und auf die Behälterhöhe bezüglichen nur geringen Breitenbemessung die Faltbarkeit der Behälter in keiner Weise einschränkt oder auch nur behindert. Ein weiteres, zusätzlich stabilisierendes Element schafft die die Behälter überdeckende bewegliche Platte als Pendant zu der feststehenden unteren Ladeplattform.

Der erfindungsgemäße Fahrzeugaufbau setzt keine bestimmte Anzahl von Transportbehältern voraus. Während in der Regel zwei oder drei über die Länge der Ladeplattform in Tandem-Anordnung verteilte Behälter die bevorzugte Lösung darstellen, wäre ebenso ein einziger Behälter von zumindest angenähert der Ladeplattform entsprechender Grundfläche oder stattdessen auch die Anordnung mehrerer kleinerer Behälter in zwei oder mehr Reihen nebeneinander denkbar. Die Erfindung ist in dieser Hinsicht an kein festliegendes Schema gebunden. Es empfiehlt sich, mehrere Behälter an jeweils gemeinsame Füll- und Entleerungssammelrohre anzuschließen, um einmal den Füll- und Entleerungsvorgang zu vereinfachen und zum anderen in allen Behältern stets gleiche Füllstandshöhe einzuhalten.

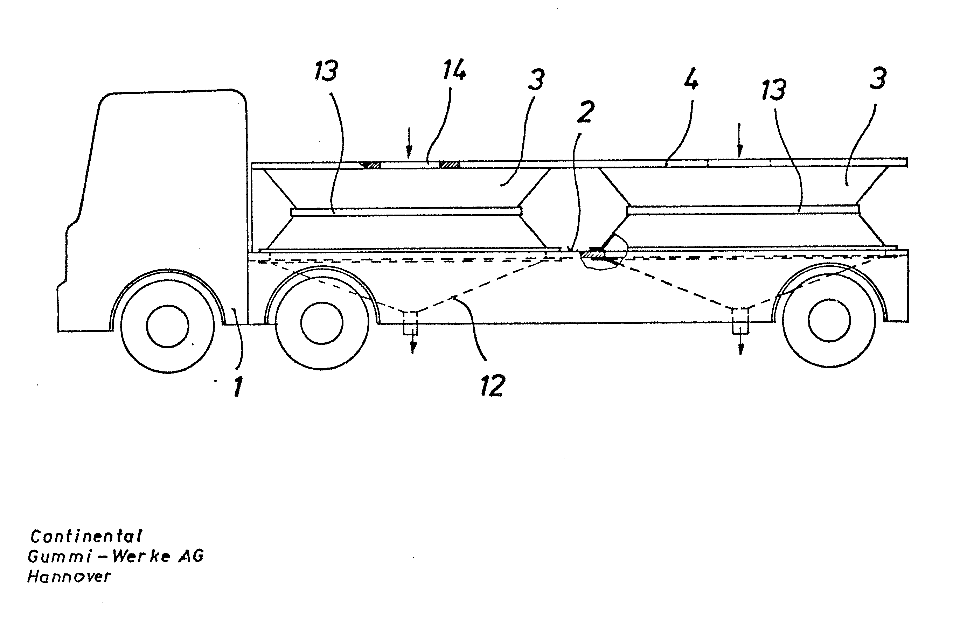

Zum Verdeutlichen der Erfindung ist ein Ausführungsbeispiel in der Zeichnung schematisch dargestellt. Die einzige Figur der Zeichnung zeigt ein Teilstück eines neuartigen Fahrzeugaufbaues in Seitenansicht.

Das in der Zeichnung nur angedeutete Fahrzeug 1, im üblichen Sinne ein offener Lastkraftwagen, trägt auf seiner Ladeplattform 2 zwei hintereinander angeordnete und jeweils die Plattformbreite im wesentlichen überdeckende faltbare Transportbehälter 3. Die im gefüllten Zustand gezeichneten Behälter sind aus Zuschnitten gummi- oder kunststoffbeschichteter Gewebebahnen in der Form jeweils zweier aufeinandergesetzter Kegelstümpfe hergestellt und mit einem den kleinsten Durchmesser im Bereich ihrer mittigen Einschnürung unter allen Umständen wahrenden zugfesten Gürtel 13 ausgestattet. Der vergleichsweise schmale Gürtel 13 ist aus hochzugfesten, dehnungsarmen Fasern als endlos in sich geschlossenes Gebilde aufgebaut und haftend mit der Behälterwandung verbunden. Im Falle mehrschichtiger Wandausbildung kann er stattdessen auch in die Behälterwandung eingebettet sein.

Die nach oben offenen Behälter 3 sind von einer starren Platte 4 mit beiden Behältern zugeordneten Einfüllöffnungen 14 überdeckt. Die Platte 4 entspricht in ihren Abmessungen praktisch der feststehenden Ladeplattform 2 und kann ihrerseits zum Aufnehmen von Stückgut oder anderem festen Transportgut unabhängig von dem Füllungszustand der faltbaren Behälter 3 benutzt werden.

Die beiden Behälter 3 sind als Randeinfassung über Öffnungen in der Ladeplattform 2 in festem Zusammenhang mit dieser angebracht und laufen nach unten in Entleerungstrichter 12 aus. Im Leerzustand falten sie sich auf ein Kleinstmaß zusammen, wobei die Platte 4 bis auf einen geringen Abstand auf die Ladeplattform 2 abgesenkt ist. Infolge ihrer besonderen Formgebung und der mittigen Anordnung des zugfesten Gürtels legen sich die Behälterwände in jeweils beiden Höhenabschnitten stets ohne die Gefahr nachteiliger Faltenbildungen aufeinander.

Patentansprüche:

1. Aufbau für Fahrzeuge zum wechselweisen Transportieren von flüssigen oder fließfähigen und festen Stoffen oder Stückgütern, mit einem oder mehreren auf einer Ladeplattform fest angebrachten faltbaren Transportbehältern, dadurch gekennzeichnet, daß die aus biegsamem Werkstoff wie gummi- oder kunststoffimprägnierten oder -beschichteten Geweben od. dgl. hergestellten Transportbehälter (3) im Füllungszustand die Form zweier mit ihren kleineren Stirnflächen aufeinandergesetzter Kegel- oder Pyramidenstumpf-Mäntel aufweisen und mit einer den Bereich ihrer kleinsten Querschnittsfläche umspannenden zugfesten Bandage (13) versehen sind.

2. Aufbau nach Anspruch 1, dadurch gekennzeichnet, daß die Bandage (13) als ein fest mit der Behälterwandung verbundener, im Vergleich zu der möglichen Gesamthöhe der Behälter (3) nur schmaler Gürtel aus biegsamen aber dehnungsarmen linienförmigen textilen Gebilden wie z.B. hochfesten Kunststoffasern, Metalldrähten oder -litzen od.dgl. ausgebildet ist.

3. Aufbau nach den Ansprüchen 1 und 2, dadurch gekennzeichnet, daß die Behälter (3) von einer eine Ladefläche für feste Stoffe bildenden, in Abhängigkeit von dem Füllungszustand der Behälter auf- und abbeweglichen starren Platte (4) abgedeckt sind.

4. Aufbau nach Anspruch 3, dadurch gekennzeichnet, daß die starre Platte (4) mit verschließbaren Einfüllöffnungen (14) für die abgedeckten Behälter (3) versehen ist.

5. Aufbau nach den Ansprüchen 1 bis 4, dadurch gekennzeichnet, daß jeder Behälter (3) mit einem durch Öffnungen in der Ladeplattform (2) geführten Auslauftrichter (12) versehen ist.

Hannover, den 26. August 1983
83-42 P/Sü          Sü/Lo

0141094